(19) Europäisches Patentamt
European Patent Office
Office européen des brevets

(11) **EP 2 737 434 B1**

(12) **EUROPEAN PATENT SPECIFICATION**

(45) Date of publication and mention
of the grant of the patent:
**06.01.2016 Bulletin 2016/01**

(51) Int Cl.:
**G06K 9/00** (2006.01)

(21) Application number: **12754066.4**

(22) Date of filing: **27.07.2012**

(86) International application number:
**PCT/GB2012/051834**

(87) International publication number:
**WO 2013/017858 (07.02.2013 Gazette 2013/06)**

(54) **GAIT RECOGNITION METHODS AND SYSTEMS**

GANGERKENNUNGSVERFAHREN UND SYSTEME

PROCÉDÉS ET SYSTÈMES DE RECONNAISSANCE DE DÉMARCHE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.07.2011 GB 201113143**

(43) Date of publication of application:
**04.06.2014 Bulletin 2014/23**

(73) Proprietor: **University Of Ulster
County Londonderry BT52 1SA (GB)**

(72) Inventors:
• **CONDELL, Joan**
  Coleraine
  Northern Ireland BT51 4EL (GB)
• **PRASAD, Girijesh**
  Londonderry
  Northern Ireland BT48 8SL (GB)
• **YOGARAJAH, Pratheepan**
  Londonderry
  Northern Ireland BT48 7PB (GB)

(74) Representative: **Gardiner, Stephen Robin
Dehns
St Bride's House
10 Salisbury Square
London EC4Y 8JD (GB)**

(56) References cited:
• YOGARAJAH PRATHEEPAN ET AL: "Individual Identification Using Gait Sequences under Different Covariate Factors", 13 October 2009 (2009-10-13), COMPUTER VISION SYSTEMS, SPRINGER BERLIN HEIDELBERG, BERLIN, HEIDELBERG, PAGE(S) 84 - 93, XP019131981, ISBN: 978-3-642-04666-7 the whole document
• GORELICK ET AL: "Shape Representation and Classification Using the Poisson Equation", IEEE TRANSACTIONS ON PATTERN ANALYSIS AND MACHINE INTELLIGENCE, IEEE SERVICE CENTER, LOS ALAMITOS, CA, US, vol. 27, no. 12, 1 December 2006 (2006-12-01), pages 1991-2005, XP011149699, ISSN: 0162-8828, DOI: 10.1109/TPAMI.2006.253
• HARITAOGLU I ET AL: "Backpack: detection of people carrying objects using silhouettes", COMPUTER VISION, 1999. THE PROCEEDINGS OF THE SEVENTH IEEE INTERNATION AL CONFERENCE ON KERKYRA, GREECE 20-27 SEPT. 1999, LOS ALAMITOS, CA, USA,IEEE COMPUT. SOC, US, vol. 1, 20 September 1999 (1999-09-20), pages 102-107, XP010350443, ISBN: 978-0-7695-0164-2
• KHALID BASHIR ET AL: "Feature selection on Gait Energy Image for human identification", ACOUSTICS, SPEECH AND SIGNAL PROCESSING, 2008. ICASSP 2008. IEEE INTERNATIONAL CONFERENCE ON, IEEE, PISCATAWAY, NJ, USA, 31 March 2008 (2008-03-31), pages 985-988, XP031250719, ISBN: 978-1-4244-1483-3

- **SHAMSHER SINGH ET AL: "Biometric Gait Recognition with Carrying and Clothing Variants", 16 December 2009 (2009-12-16), PATTERN RECOGNITION AND MACHINE INTELLIGENCE, SPRINGER BERLIN HEIDELBERG, BERLIN, HEIDELBERG, PAGE(S) 446 - 451, XP019136314, ISBN: 978-3-642-11163-1 the whole document**

**Description**

The invention relates to systems and methods for identification and recognition using gaits. In particular, preferred embodiments of the invention relate to human identification based on gait recognition with enhanced removal of covariate factors.

Individual identification systems (i.e. systems for identifying an individual), typically rely on obtaining and matching biometric information from a subject in order to identify that subject from a database of pre-stored biometric records. A biometric is something about an individual that can be measured and used to identify that individual. Biometric information can be broadly classified into anatomical biometrics, such as finger prints, palm prints, iris scans, retina scans or face recognition, and behavioural biometrics, such as voice signature, blinking pattern or gait. Some systems may use combinations of multiple biometrics to perform identification. These may combine anatomical biometrics with behavioural biometrics.

In some applications, e.g. surveillance, anatomic biometrics cannot generally be used as these normally require contact or close range examination of the subject. Additionally, the cooperation of the subject is normally required. For example finger print readers need contact with the finger and iris scanners need the user to look into an eyepiece. On the other hand, behavioural biometric information can be captured from a distance and without the cooperation (or even without the knowledge) of the subject. For example, gait recognition can be performed on images taken by a CCTV camera from a distance.

Gait recognition is adversely affected by covariate factors such as the subject carrying objects or wearing different clothing. Therefore it is highly desirable to remove or reduce the effect of such covariate factors from the gait features in order to improve the individual identification rate.

Gait recognition methods can be mainly classified into three categories:

spatiotemporal-based, model-based and appearance-based. Spatiotemporal-based methods uncover gait shape variation information in both the spatial and temporal domains, and one such related work includes shape variation-based frieze features. Model-based methods aim to model the body and shape of the person when he/she is walking. Appearance-based methods focus on extracting the static (i.e. head and torso) and/or dynamic (i.e. motion of each arm, hand and leg) information of a walking person from sequences of binary silhouettes and representing the information as a single image.

The computational cost of model-based methods is relatively high compared to appearance-based methods. In appearance-based gait recognition, gait recognition can be based on static features, dynamic features or a fusion of static and dynamic features. Static and dynamic information of gait features is therefore valuable information for gait recognition.

Existing appearance-based gait recognition methods achieve good gait recognition rates for normal (non-covariate) gait sequences, but they are highly sensitive to covariate effects and are thus impractical for real-world biometric identification systems. This is mainly because body-related parameters are not robust as they are dependent on clothing, bags, and other factors.

One of the more effective appearance-based gait recognition methods is the Gait Energy Image (GEI) method. The GEI is the averaged image obtained by averaging a sequence of binary silhouette images which span a gait cycle. To obtain a GEI, the sequence of binary silhouette images is obtained, the images are scaled so that they are the same size and the images are aligned in some way (typically, for a human being, this can be achieved by centring the upper half of the silhouette with respect to its horizontal centroid) and the corresponding pixels of each frame are averaged to produce the relevant GEI pixel. The resulting GEI is not a binary image, but may be considered as a grey-scale image.

The GEI method can obtain good performance under normal gait sequences, but it is sensitive to covariate factors, such as clothing and carrying of objects.

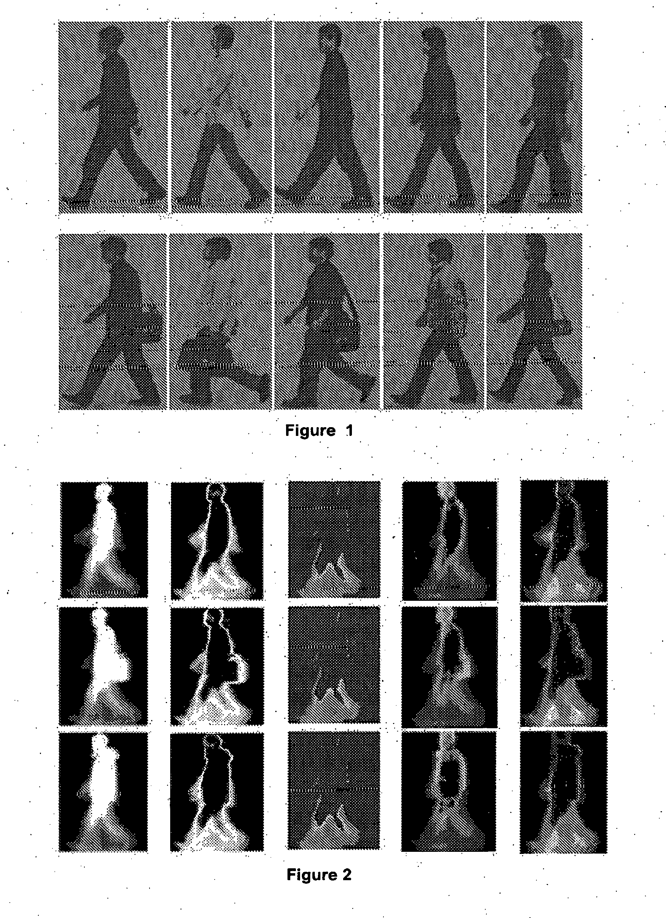

Various attempts have been made to improve the robustness of the GEI method to covariate factors. For example, the Enhanced GEI (EGEI) gait representation method (X. Yang, et al (2008) "Gait recognition based on dynamic region analysis", Signal Processing 88, pp. 2350-2356), applies dynamic region analysis to improve dynamic information of the features extracted. However, it can be seen (see Fig. 2) that the major parts of, e.g. bag and coat which should be removed are treated as static regions and remain in the EGEI, indicating that they are treated as dynamic regions in the EGEI.

Zhang et al. ((2010) "Active energy image plus 2DLPP for gait recognition", Signal Processing 90 (7), pp. 2295-2302) proposed an active energy image (AEI). The advantage of AEI is that it can retain the dynamic characteristics of gait for recognition. The active regions are the regions that would be calculated from the difference between two silhouette images in the gait sequence. The AEI is created by summing up these active regions. Experiments showed that AEI has a higher recognition rate than GEI on the CASIA gait covariate dataset (Institute of Automation, Chinese Academy of Sciences - http://www.cbsr.ia.ac.cn/english/Gait%20Databases.asp).

Shannon entropy based Gait Entropy Image (GEnI) (Bashir et al (2009) "Gait recognition using gait entropy image", 3rd International Conference on Crime Detection and Prevention (ICDP), pp. 1-6) has been used to reduce the covariate effect in gait features. Based on computing entropy, dynamic body areas which undergo a gait cycle will lead to high gait entropy value, whereas those areas that remain static would give rise to low values. On the other hand the $M_G$ technique (Khalid Bashir et al (2010) "Gait recognition without subject cooperation", Pattern Recognition Letters 31 (13): 2052-2060) uses a feature mask to remove the static parts from the GEI.

Fig. 2 shows a comparison of the different images produced using these techniques. The top row in Fig. 2 shows images for a normal gait (with no covariate effects), the second row shows images for a person carrying a bag and the third row shows images for a person wearing a coat. From left to right, the columns in Fig. 2 show the following techniques: GEI, GenI, $M_G$, EGEI and AEI.

X. Li et al "Gait Components and Their Application to Gender Recognition", IEEE Transactions on systems, man, and cybernetics - Part C: Applications and reviews, vol. 38, no. 2, March 2008 uses six control points to partition an averaged gait image into seven parts and explores the effect of different combinations of those parts on the recognition rate under various circumstances.

At least the preferred embodiments of the present invention aim to provide a more robust appearance-based gait feature representation to reduce the effect of clothing and carrying covariate factors and increase the recognition rate.

According to an aspect of the invention, there is provided a method of producing a gait representation for a subject, comprising the steps of: acquiring a sequence of images of the subject representing the gait of said subject; analysing each image of said sequence to identify one or more regions having a certain thickness based on a thickness characteristic function and a threshold value; for each image, removing said one or more regions from said image to produce a modified image; and combining said modified images in the sequence to produce a gait energy image; wherein the step of analysing the images comprises identifying a boundary between background and foreground parts of each image; and characterized in that the thickness characteristic function is based on a Poisson Random Walk function, where the value for a given point within the foreground part of an image is the expected number of steps that will be taken in a Poisson Random Walk until the walk reaches said boundary of said image.

Calculating and applying a thickness characteristic to the images allows a better identification of regions of the images which are most affected by covariate factors such as carrying an object or wearing heavy clothing. Such covariate factors have been found most often to be associated with the more static parts of the subject, i.e. the torso. The more dynamic parts of the subject, i.e. hands, legs and feet, are less affected by covariate factors and produce reliable gait information that can be used for identification purposes. Previous attempts at segmenting gait energy images have only identified different parts of the subject in a crude manner based on a small number (e.g. six) of control points. Such methods can for example identify a general torso region, but the crude approximation may miss parts of the torso and will most likely also miss static parts of the covariate factors such as the bottom of a long coat or a bag carried by the side. The present invention instead analyses the images to identify the thicker parts of the image, i.e. the parts having more bulk associated with them. Covariate factors will generally combine with the torso parts and together they form the bulker parts of the images. Thus removing the thicker regions removes more of the effects of the covariate factors. In normal (non-covariate) gait identification, the torso provides useful gait information. Removing the torso parts of the images therefore removes some useful gait identification information, but the disadvantages of this are outweighed by the advantages of removing the covariate factors.

Further, previous attempts to remove covariate factors have identified segments of the gait energy image (GEI). The GEI is an averaged image based on a combination of all the images in the sequence. The averaging effect of the GEI means that it is not easy to identify thick or bulky parts of the image. By contrast, the present invention analyses each of the images in the sequence separately, calculating and applying the thickness characteristic to each image so as to identify the thicker, more static parts of the subject in each individual frame of the sequence. This allows better tracking and thus better removal of the covariate factors which can often change position relative to the subject from frame to frame.

The step of acquiring a sequence of images is preferably a step of acquiring a sequence of binary images of the subject. This can in itself involve significant processing. For example, images taken from a video camera, such as a CCTV camera will typically contain a subject within a broader field of view: Therefore preferably the step of acquiring images of the subject involves identifying the subject within the larger image and extracting the subject from that larger image. The information of interest is the profile of the subject, which is in the foreground of the larger image. The larger image will also typically contain background image information which is preferably removed. The resulting extracted subject images are preferably in the form of binary images, i.e. with one value identifying points within the subject's profile (i.e. in the foreground) and the other value identifying pints outside the subject's profile (i.e. in the background). Such images are often represented in black and white and may be referred to as silhouette images. The images of the subject are preferably scaled to the same resolution and centred so that the images in the sequence are all aligned with each other (the centring may typically be aligning the images according to their horizontal centroids). The images are typically raster (bitmap) images.

The processing of the images may also include identifying the boundary of each binary image, i.e. the boundary between the background and the foreground parts of the image. In the case of raster images, this boundary may comprise the set of pixels of the foreground which lie adjacent to at least one pixel of the background. Other methods of identifying the boundary may also be used.

There are various ways to identify a subject in a larger picture and to identify a rectangle bounding the subject. Likewise, there are various ways to separate foreground from background parts of the image. These techniques are well known in the art and are not further described here.

The thickness characteristic may be a continuous function which can be evaluated at any point within the binary image of the subject. The binary image of the subject may be a vector graphic image (regions defined by paths) or it may be a raster image (an array of pixels, each having its own value). In the case of raster images, the thickness characteristic is preferably a discrete function, preferably having a value for each pixel in the image (i.e. being an array of the same dimensions as the image). The thickness characteristic for a point is preferably dependent on the distance of that point from the subject boundary within the image. This might include functions which are directly dependent on a measurement (or calculation) of distance from the subject boundary, but also includes functions based on a characteristic which varies with distance from the subject boundary, for example functions which would be statistically expected to vary with distance from the subject boundary.

The thickness characteristic function is based on a Poisson Random Walk function, where the value for a given point (or pixel) within the subject region is the expected number of steps that will be taken in a Poisson Random Walk until the walk reaches the boundary of the subject region. The Poisson Random Walk function is preferred over other functions (such as the Distance Transform function) as it grows quickly away from the boundary of the subject region and therefore allows easier thresholding to separate thicker regions from less thick regions. This allows the identified boundary of the thick region to be closer to the actual subject region boundary, thereby allowing removal of a greater portion of the torso region and possible covariate factors.

The thickness characteristic function may be the Poisson Random Walk function itself, but is preferably a more complex function based on that basic function. Where the basic function values rise rapidly away from the boundary of the subject region, the thickness characteristic function is preferably also based on both the value of the Poisson Random Walk basic function (or other distance-related basic function) and on the gradient of that basic function (preferably the absolute value or magnitude of the gradient). Using the gradient of the basic function together with the actual basic function value allows the identified "thick" region to extend closer to the subject region boundary, thereby allowing removal of a larger torso portion and correspondingly better removal of covariate factors.

In particularly preferred embodiments, the thickness characteristic function is based on the logarithm of the basic function or, more preferably still, on the logarithm of the basic function combined with the magnitude of the gradient of the basic function. Taking the logarithm improve the definition of the identified region yet further by sharpening the edges of the thickness characteristic function. Overall, it is desirable to have a thickness characteristic function which has a steep gradient near to the boundary of the subject region.

It will be appreciated that the thickness characteristic function may be a convex or concave function, but this need not necessarily be the case. It may instead have one or more local maxima and/or minima within the "thick" region. Setting an appropriate threshold value will avoid the local maxima / minima creating several sub-regions within the region to be extracted.

The threshold value of the thickness characteristic function is preferably selected so that it separates the torso region from the rest of the subject region. The torso region here includes any covariate factors that thicken the torso region (i.e. make the torso region more bulky). The threshold value may be a predetermined value (i.e. determined prior to evaluation of the thickness characteristic function), or it may be determined after analysis of the thickness characteristic function.

Removing the identified region from the image may be done in any suitable way so as to prevent that region from being taken into account in further processing. Preferably the step of removing the identified region from a binary image comprises setting the relevant values of the image to the background value.

The step of combining the modified images to generate a gait energy image (GEI) may also be done in a number of suitable ways. In some preferred embodiments, the step of combining the modified images comprises summing the corresponding pixel values in each of the images to produce the corresponding GEI pixel value. In other words, a pixel location is selected, the pixel values for that pixel location are taken from each of the images in the sequence and are summed to produce the output GEI pixel value at that location. The pixel values may be averaged by dividing the sum by the number of frames in the image sequence. The output pixel values may be scaled so that they all lie within a preferred range for further processing. In some preferred embodiments, the pixel values are scaled so that the values range from 0 to 255. With this range, the threshold is preferably selected to be in the range 140 - 170, more preferably in the range 150-160. It will be appreciated that these thresholds are dependent on the scaling of the data. The threshold is preferably greater than 55% of the top of the range. The threshold is preferably less than 70% of the top of the range. The threshold preferably lies within a range of 55 to 67% of the top of the range, more preferably within a range of 59 to 63% of the top of the range.

The GEI obtained by the above processing may be compared with corresponding GEIs in a database directly. However, preferably for ease of comparison, the image data is further processed to simplify the comparison process. Preferably the dimensionality of the data is reduced. The GEI image may be considered as a column vector, with each pixel in the image representing one dimension of the vector. Processing such data on its own would be computationally very intensive. Therefore preferably the most important elements of the data are extracted and kept, while less important elements of the data may be discarded. Preferably the GEI image is subjected to either or both of Principal Component Analysis and Linear Discriminant Analysis. Each of these techniques can be used to reduce the dimensionality of the data and thereby facilitate the process of attempting to match a measured gait to a gait in the gait database. In other embodiments, other techniques for reducing dimensionality may be used. In particularly preferred embodiments, Principal Component Analysis (PCA) is applied first, followed by Linear Discriminant Analysis (LDA). PCA transforms the data to a subspace of lower dimensionality, while keeping the greatest variances. LDA transforms the data to a subspace which best separates the classes of the data (each class corresponding to an individual and therefore being the target of the matching algorithm, i.e. the matching algorithm attempts to identify a class which best matches the probe image data).

In preferred embodiments, the dimensionality of the data is reduced to be in the range 130-300, preferably 130-250, more preferably 130-150. However, these values will depend on the size of the images as well as the number of classes in the database. The dimensionality should be greater than the number of classes. In some preferred embodiments, the dimensionality is less than twice the number of classes.

It will be appreciated that the database may store GEI data obtained by producing GEIs according to the above-described image sequence combination process. Alternatively, the database may store further processed GEI data, e.g. data representing GEIs which have already been subjected to PCA and/or LDA for easier and faster matching.

The method may further comprise a matching step in which the probe GEI is matched to a GEI in the database. One preferred technique for matching is the k-nearest neighbour approach, although it will be appreciated that other matching methods may be used.

According to another aspect, the invention provides a system for producing a gait identifier for a subject, comprising: an image capture device for capturing a sequence of images of a subject; and a processor arranged to analyse each image of said sequence to identify one or more regions having a certain thickness based on a thickness characteristic function and a threshold value; for each image, to remove said one or more regions from said images to produce a modified image; and to combine said modified images in the sequence to produce a gait energy image; wherein as part of the analysis step, the processor is arranged to identify a boundary between background and foreground parts of each image; and wherein the thickness characteristic function is based on a Poisson Random Walk function, where the value for a given point within the foreground part of an image is the expected number of steps that will be taken in a Poisson Random Walk until the walk reaches said boundary of said image.

According to a further aspect of the invention, there is provided a software product comprising instructions which when executed by a computer cause the computer to carry out a method as described above.

The software product may be a physical data carrier. The software product may comprise signals transmitted from a remote location.

The invention also extends to a method of manufacturing a software product which is in the form of a physical carrier, comprising storing on the data carrier instructions which when executed by a computer cause the computer to carry out a method as described above.

The invention further extends to a method of providing a software product to a remote location by means of transmitting data to a computer at that remote location, the data comprising instructions which when executed by the computer cause the computer to carry out a method as described above.

The preferred features described above in relation to the method apply equally to the apparatus and to the software.

Preferred embodiments of the invention will now be described, by way of example only, and with reference to the accompanying drawings in which:

Figure 1 shows a comparison of covariate factors with people appearing with normal clothing and different covariate factors;

Figure 2 shows a comparison of different gait energy image techniques on normal and covariate-affected gaits;

Figure 3 illustrates various stages of the process for generating a gait energy image according to an embodiment of the invention;

Figure 4 illustrates the gait energy image results generated according to an embodiment of the invention for three individuals under normal and covariate-affected gaits;

Figure 5 shows a comparison of results for an embodiment of the invention and a number.of previous gait energy image techniques on normal and covariate-affected gaits;

Figure 6 shows a graph of recognition rates on normal, clothing and carrying gait sequences plotted against subspace of dimensionality;

Figure 7 shows a comparison between two thickness characteristic functions;

Figure 8 shows a comparison between the functions U, $\Phi$ and log($\Phi$); and

Figure 9 shows the effect of different thresholds on a GEI according to an embodiment of the invention:

The embodiments of the invention described here take a sequence of images in time (e.g. a video sequence) of a subject's gait. These images may be captured for example from a CCTV or other surveillance camera.

Figure 1 shows some example images. The top row in Figure 1 shows samples of individual walking sequences used for training and the second row of Figure 1 represents samples of individuals with different clothing and carrying objects, i.e. covariate factors which compromise gait recognition.

There are then three main steps in the processing:

1. Extract the subject from each frame of the video sequence. The result is the silhouette (a binary image) of the subject for each frame.

2. Use the Poisson Random Walk (PRW) technique (described in detail below) to extract appearance-based features that reduce the effect of covariate factors. Then Linear Discriminant Analysis (LDA) is applied to reduce the dimension of the data and also to improve the discriminative power of the extracted features.

3. Classify the data and make a decision, i.e. decide the identity of a subject using the k-nearest neighbour (*k*-NN) technique.

For comparison with the embodiments described here, Figure 2 shows different gait energy image (GEI) features for a particular individual from the CASIA gait dataset according to a number of existing techniques. The columns from left to right represent GEI, GEnI, $M_G$, EGEI and AEI respectively (as calculated in the referenced papers cited in the introduction). The rows of Figure 2 from top to bottom represent normal, carrying bag and wearing coat conditions of walking. It can be seen that the simple GEI on the far left takes into account all silhouette information while the other techniques each remove (or suppress) various amounts of information from the silhouettes. The white and grey parts of the images represent information that is analysed for gait recognition, while the black areas are not used.

The silhouettes are extracted using a Gaussian model based background estimation method. Then the bounding box of the silhouette image in each frame is computed. The silhouette image is extracted according to the size of the bounding box and the extracted image is resized to a fixed size (e.g. 128 x 100 pixels). The purpose of resizing is to eliminate the scaling effect. The resized silhouette is then aligned centrally with respect to its horizontal centroid. After preprocessing the gait period is estimated in an individual's walking sequences.

Since the proposed gait feature templates depend on the gait period, it is necessary to estimate the number of frames in each walking cycle. A single walking cycle can be regarded as that period in which a person moves from the mid-stance (both legs are close together) position to a double support position (both legs are far apart), then the mid-stance position, followed by the double support position, and finally back to the mid-stance position. The gait period can then be estimated by calculating the number of foreground pixels in the lower half of the silhouette image. In mid-stance position, the silhouette image contains the smallest number of foreground pixels. In double support position, the silhouette contains the greatest number of foreground pixels. The gait period is calculated using the median of the distance between two consecutive minima.

Next, the Poisson Random Walk (PRW) is applied to reduce the effects of covariate factors in each silhouette image. This is done as follows:

Consider a shape as a given silhouette S in a grid plane (a binary image) and $\partial S$ a simple closed curve as its boundary. The PRW approach assigns a value to every pixel of the silhouette. This value is the expected number of steps taken (starting from the pixel) to hit the boundary and for a pixel at point (*x,y*) is denoted $U(x, y)$. $U(x, y)$ can be computed recursively as follows: At the boundary of $S$, i.e., $(x, y) \in \partial S$, $U(x, y) = 0$. At every point (*x, y*) inside $S$, $U(x, y)$ is equal to the average value of its immediate four neighbours plus a constant (representing the amount of time required to get to an immediate neighbour), i.e.,

$$U(x,y) = \frac{1}{4}(U(x+1,y) + U(x-1,y) + U(x,y+1) + U(x,y-1)) + 1 \qquad (1)$$

This constant is set to one time unit. Note that (1) is a discrete form approximation of the Poisson equation:

$$\Delta U(x,y) = -\frac{4}{h^2} \qquad (2)$$

with $\Delta U = U_{xx} + U_{yy}$ denoting the Laplacian of $U$ and $\frac{4}{h^2}$ denoting the overall scaling. For convenience, $\frac{4}{h^2}$ is set as 1 (intuitively, meaning one spatial unit per one time unit, where one spatial unit measures the distance to an immediate neighbour). Therefore, solve,

$$\Delta U(x,y) = -1 \qquad (3)$$

with $(x, y) \in S$, subject to Dirichlet boundary conditions $U(x, y) = 0$ at the bounding contour $\partial S$.

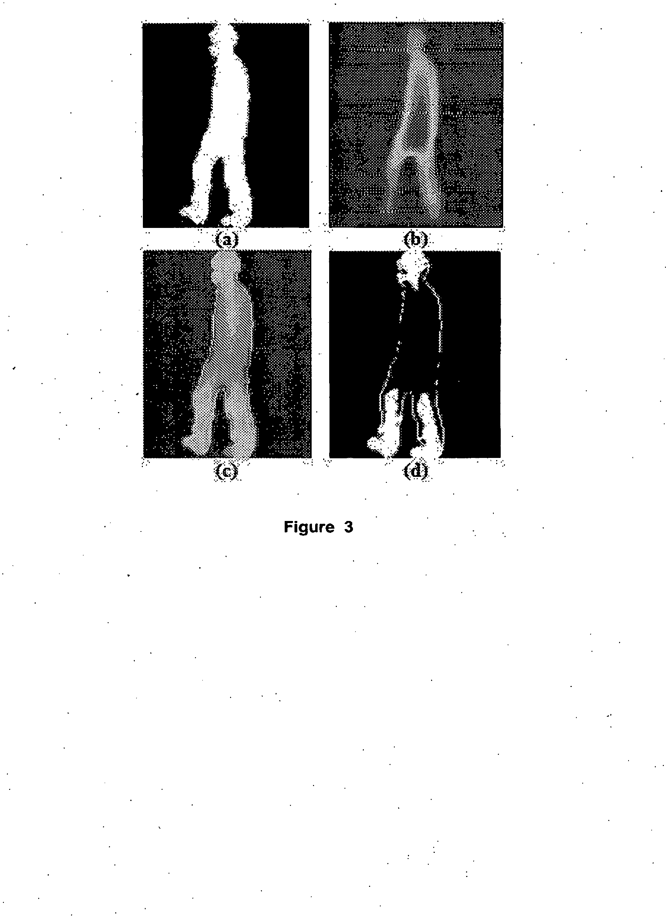

Figure 3 shows various representations of the gait information generated during the following procedure. Figure 3(a) shows a single binary silhouette image. The white areas represent the subject (foreground) and the black areas represent the background (non-subject) parts of the image. Figure 3(b) shows the Poisson Random Walk function U. The red and orange areas in the middle of the torso portion represent higher values of U, i.e. a higher expected number of steps to reach the boundary. The blue colours around the edge of the subject region represent lower values of U (fewer steps). Figure 3(c) shows the function Ψ which is calculated from the basic PRW function U. Ψ is used for thresholding to identify the thicker parts of the image. A clear distinction can be seen between the higher-valued orange/red parts in the torso of Figure 3(c) compared with the lower-valued green/blue regions in the left and right legs and the head of Figure 3(c). A threshold is used to separate the higher values of the torso region which are then removed from the original silhouette of Fig. 3(a) to leave the modified silhouette of Fig. 3(d).

In more detail, the pixels near the boundary have small values of $U$ (see Figure 3(b)). However, the gradient of $U$ has larger values near the boundaries and smaller values in the center of the silhouette. We define the function Φ as follows:

$$\Phi(x,y) = U(x,y) + \| \nabla U(x,y) \|^2 \qquad (4)$$

Φ has a distinctive characteristic to separate different parts of a shape based on their thickness. We consider Ψ = log (Φ) (see Figure 3(c)) to reduce the covariate factor effects. Then Ψ is scaled to make its values ranges from 0 to 255. Pixel coordinate positions corresponding to pixel values greater than 160 are selected. Then the selected pixels' coordinate positions which correspond to the pixel values of Figure 3(a) are changed to 0 and the PRW silhouette ($PRW_{sil}$) is generated; see Figure 3(d). Then a sequence of $PRW_{sil}$ for a gait period is considered to calculate the final $P_{RW}$GEI feature. $P_{RW}$ GEI is calculated as follows:

$$P_{RW}GEI(x,y) = \sum_{n=1}^{N} PRW_{sil}^{n}(x,y) \qquad (5)$$

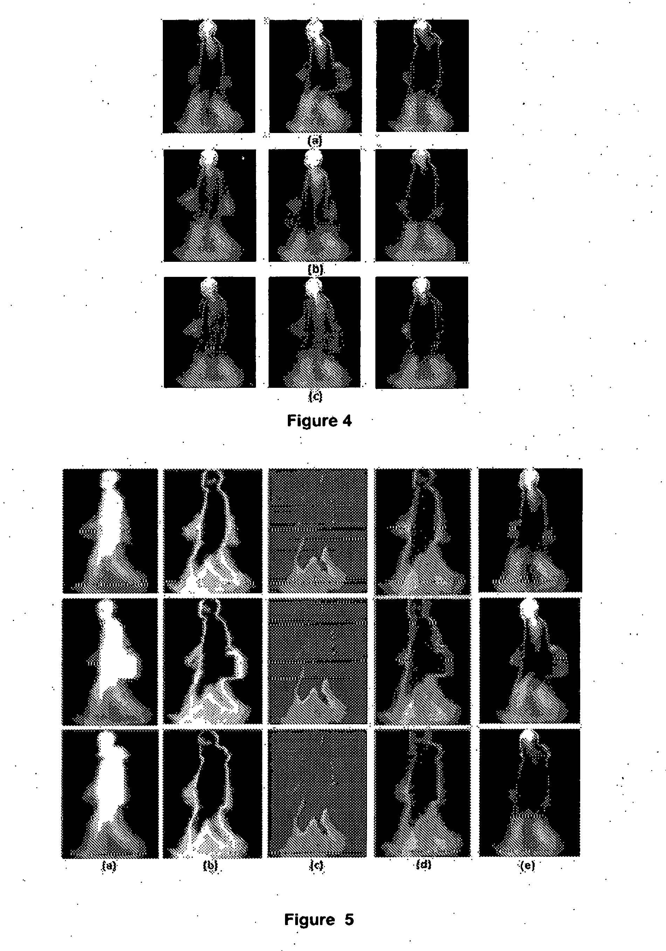

where $PRW_{sil}^{n}$ is a $PRW_{sil}$ of the $n^{th}$ frame of the particular gait cycle. N is the number of frames in a particular gait period. Figure 4 shows $P_{RW}$ GEI features of a sample of three individuals from the CASIA-B database. The three individuals are shown in Figures 4(a), 4(b) and 4(c) respectively. The columns of these figures from left to right show i) normal, ii) carrying objects, iii) different clothing. Also Figure 5 shows feature representations of (a) GEI, (b) GEnI, (c) $M_G$, (d) AEI and (e) $P_{RW}$ GEI for a particular individual. It can clearly be seen that in Fig. 5(e) ($P_{RW}$GEI) the torso (and covariate factors) has been more accurately identified and removed, leaving the head, leg and hand information for gait identification.

Once the $P_{RW}$GEI image of a subject has been generated, an attempt can be made to match that image to a database of pre-stored subject records.

One method of doing this is as follows. In the following, the term *probe* is used to identify an image generated of a subject which is to be queried in the database. The term *gallery* is used to denote a set of pre-stored images that form the records of the database. In other words, *gallery* refers to training data and *probe* refers to testing data.

When gait sequences are represented as $P_{RW}$ GEI, gait recognition can be performed by matching a *probe* $P_{RW}$ GEI to the *gallery* $P_{RW}$ GEI that has the minimal distance to the probe $P_{RW}$ GEI.

Suppose we have $N$ $d$-dimensional gallery $P_{RW}$ GEI templates $\{x_1, x_2, ..., x_n, ..., x_N\}$ belonging to $c$ different classes (i.e. individuals). Each template is a column vector obtained by reshaping $P_{RW}$GEI images as column vectors which have been subjected to Principal Component Analysis (PCA). PCA is an orthogonal linear transformation that transforms the data to a subspace of dimensionality $\tilde{d}$ (with $\tilde{d} < d$). The PCA subspace keeps the greatest variances by any projection of the data so that the reconstruction error defined below is minimised:

$$J_{\tilde{d}} = \sum_{n=1}^{N} \left\| \left( m + \sum_{j=1}^{\tilde{d}} a_{nj} e_j \right) - x_n \right\|^2 \tag{6}$$

where $m$ is the mean of the data, $\{e_1, e_2, ..., e_{\tilde{d}}\}$ are a set of orthogonal unit vectors representing the new coordinate system of the subspace, $a_{nj}$ is the projection of the $n$ th data to $e_j$. $J_{\tilde{d}}$ is minimised when $e_1, e_2, ..., e_{\tilde{d}}$ are the $\tilde{d}$ eigenvectors of the data covariance matrix with the largest eigenvalues (in decreasing order).

Now the gallery template $x_n$ is represented as a $\tilde{d}$ -dimensional feature vector $y_n$ and we have

$$y_n = [e_1, e_2, ..., e_{\tilde{d}}]^T x_n \tag{7}$$

PCA is followed by LDA which aims to find a subspace where data from different classes are best separated in a least square sense. Different from PCA, LDA is a supervised learning method which requires the gallery data to be labelled into classes. The LDA transformation matrix, W maximises

$$J(W) = \frac{|W^T S_B W|}{|W^T S_W W|} \tag{8}$$

where $S_B$ is the between-class scatter matrix and $S_W$ the within-class scatter matrix of the training (gallery) data in the PCA subspace $\{y_1, y_2, ... y_N\}$. $J(W)$ is maximised by setting the columns of $W$ to the generalised eigenvectors that correspond to the $c$-1 nonzero eigenvalues in

$$S_B w_j = \lambda^j S_W w_j \tag{9}$$

where $w_j$ is the $j$ th column of $W$ and $c$ is the number of classes in the training data. Denoting these generalised eigenvectors as $\{v_1, v_2, ..., v_{c-1}\}$, a gallery template is represented in the LDA subspace as:

$$z_n = [v_1, ..., v_{c-1}]^T y_n \tag{10}$$

After this dimensionality reduction, both the gallery and probe $P_{RW}$ GEI feature vectors are represented in a ($c$-1) dimensional subspace and recognition can be computed as the distance of the probe feature vector to the gallery feature vector.

The nearest neighbour classifier is adopted in the proposed algorithm. Suppose there are $N_{gallery}$ training subjects, for the individual recognition, $N$ observations $\{x_1, ..., x_N\}$ can be represented as $P_{RW}$ GEI images reshaped as column vectors. To perform recognition, we first obtain a set of "gallery" $P_{RW}$ GEI for each class

$\{\widetilde{x}_1^1, \widetilde{x}_1^2, ..., \widetilde{x}_1^{N/C} ......, \widetilde{x}_C^1, \widetilde{x}_C^2...\widetilde{x}_C^{N/C}\}$, where there are C classes, and find their projections onto the reduced

subspace, $\{\widetilde{z}_1^1, \widetilde{z}_1^2...\widetilde{z}_1^{N/C}...,\widetilde{z}_C^1, \widetilde{z}_C^2,.....\widetilde{z}_C^{N/C}\}$. Then for a test observation we obtain the $P_{RW}$ GEI $\widetilde{x}$, and calculate

the distance between its projection onto the reduced subspace, $\widetilde{z}$, and each of the elements

$\{\widetilde{z}_1^1, \widetilde{z}_1^2...\widetilde{z}_1^{N/C}...,\widetilde{z}_C^1, \widetilde{z}_C^2,.....\widetilde{z}_C^{N/C}\}$. The estimated class label $i$ is the label of the gallery image which is the closest to the original image once projected to the LDA space:

$$i = \underset{j}{argmin}\| \widetilde{z} - \widetilde{z}_j \| \qquad\qquad (11)$$

The similarity score represents the level of similarity between the testing data and the training data. The similarity score is based on the distance between $\widetilde{z}$ and $\widetilde{z}_j$, e.g. using the Euclidean distance or $l_2$-norm. Two vectors can be considered similar if they have a similarity score below a certain level, i.e. the distance between the vectors is sufficiently small. Alternatively, the best match is found by taking the similarity score for all possible vectors and selecting the vector with the minimum similarity score.

Experimental results

The CASIA-B dataset was used to evaluate the proposed algorithm. Dataset-B is a large covariate gait database. There are 124 subjects, and gait data was captured from 11 views. Three variations, namely view angle, clothing and carrying condition changes, are separately considered. The sequences used in this experiment were the sequences collected at the 90° view (i.e. fronto parallel) with normal, clothing and carrying conditions. This is because the gait of a person is best brought out in the side view. For each subject there are 10 gait sequences consisting of 6 normal gait sequences where the subject does not wear a bulky coat or carry a bag (CASIASetA), 2 carrying-bag sequences (CASIASetB) and 2 wearing-coat sequences (CASIASetC). The first 4 of the 6 normal gait sequences were used as the gallery set. The probe set included the rest of the normal gait sequences (CASIASetA2), CASIASetB and CASIASetC.

The performance of the $P_{RW}$ GEI representation of this embodiment was compared with a direct template matching (TM) method (S. Yu et al (2006), "A framework for evaluating the effect of view angle, clothing and carrying condution on gait recognition." In: ICPR, 441-444) and with the GEI, GEnI, AEI and $M_G$ techniques described in the references cited earlier. The result is given in Table 1.

**Table 1 - Performance on CASIA-B (covariate) dataset**

| | GEI + TM | GEI + CDA | GEnI + CDA | AEI + PCA + LDA | $M_G^{tj}$ + CDA | $P_{RW}$ GEI + PCA + LDA |
|---|---|---|---|---|---|---|
| | Yu et al (2006) | Bashir et al (2009) | Bashir et al (2009) | Zhang et al (2010) | Bashir et al (2010) | New technique |
| CasiaSetA2 | 97.6% | 99.4% | 98.3% | 88.7% | **100%** | 98.4% |
| CasiaSetB | 52.0% | 60.2% | 80.1% | 75.0% | 78.3% | **93.1%** |
| CasiaSetC | 32.7% | 30.0% | 33.5% | **57.3%** | 44.0% | 44.4% |
| Average | 60.8% | 63.2% | 70.6% | 73.7% | 74.1% | **78.6%** |

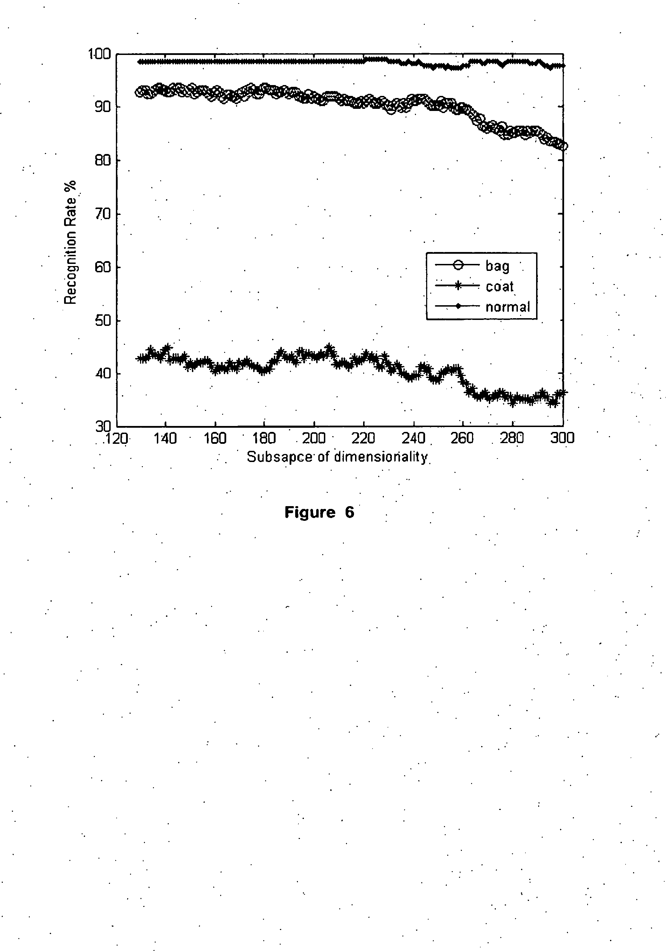

It can be seen from Table 1 that when the probe set (CASIASetA2) is tested with the gallery set, all six methods yield good recognition rates. However, when the covariate conditions are different, the performance of all six methods degrade. Nevertheless, in the case of carrying objects gait sequences (CASIASetB) the $P_{RW}$ GEI of the present embodiment outperforms the rest. It shows a very impressive recognition rate, 93.1%. At the same time, in the case of wearing bulky coat gait sequences (CASIASetC), the $P_{RW}$ GEI of the present embodiment is comparable to the rest. The average recognition results, 78.6%, show that the $P_{RW}$ GEI based gait recognition of the present embodiment produced better recognition results than any other method shown in Table 1. It is noted that the selection of $\widetilde{d}$ is effected by the dimensionality of LDA subspace, i.e. $c$ -1. In particular, $S_W$ becomes singular when $\widetilde{d} < c$ or $\widetilde{d} >> c$. Therefore an experiment was performed with $\tilde{d}$ ranging from 130 to 300 and $\tilde{d}$ =140 provided the better average recognition rate for normal, different clothing and carrying objects.gait sequences. Figure 6 shows the recognition rate of normal, clothing and carrying gait sequences plotted against subspace of dimensionality (PCA).

Increasing recognition rate by reducing the covariate effects in gait feature is the main concern of the present invention as well as the above mentioned prior art methods. The dimensional reduction methods CDA and (PCA+LDA) are similar approaches. Also the prior art methods used a similar classification approach to the 1-*KNN* method used in the present embodiment.

The above experimental results show that the performance of the algorithm for reducing covariate factor effects using the $P_{RW}$GEI based gait features worked very well. In particular, it works well in comparison with exisiting methods for reducing covariate factor effects due to carrying objects, and is comparable with existing methods for reducing covariate factor effects due to different clothing.

LDA provides optimality for discrimination among the different classes. However, in other embodiments, other methods can be used instead. For example the Geometric Mean for Subspace Selection method has recently proved effective on class separability.

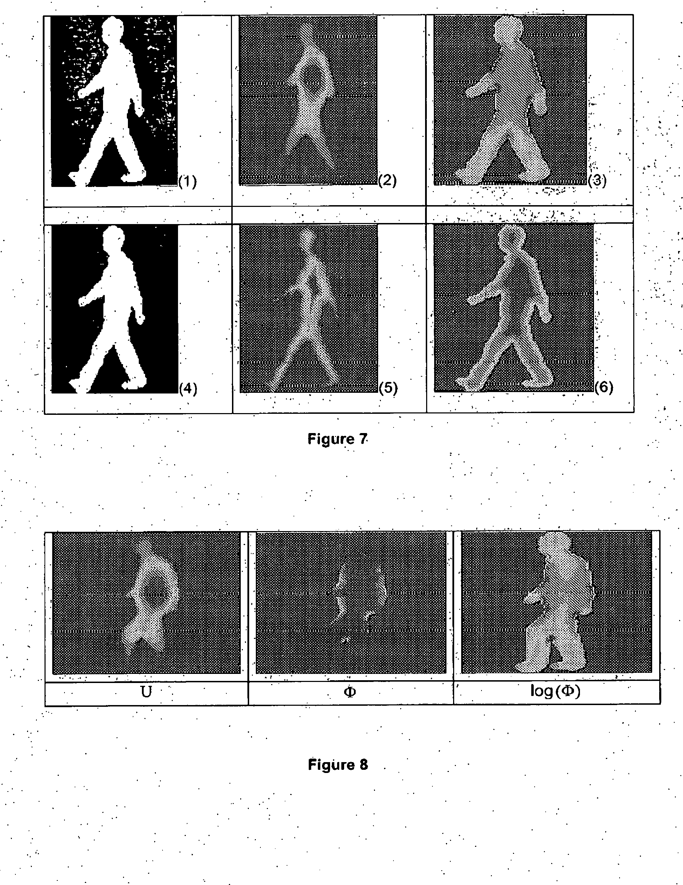

Figure 7 illustrates an alternative thickness characteristic function (illustrated in boxes (4), (5) and (6)) which could be used instead of the $P_{RW}$GEI described above. The $P_{RW}$GEI is also shown for comparison (in boxes (1), (2) and (3). The alternative thickness characteristic function is a simple Distance Transform. In this method, for each pixel in the binary image, the distance transform assigns a number that is the distance between that pixel and the nearest nonzero pixel of binary image (non-zero pixels being those lying outside of the subject region). The silhouette image is shown on the left (boxes (1) and (4)), the thickness characteristic function (i.e. $U_{PRW}$ and $U_{DT}$) in the middle (boxes (2) and (5)) and the logarithm of the thickness characteristic function $\Psi = \log(\Phi)$ on the right (boxes (3) and (6)).

It can be seen from Figure 7 that the $P_{RW}$GEI has a steeper gradient at the boundaries, i.e. the logarithm function on the right has high-values extending closer to the boundaries than the equivalent function for the Distance Transform. This makes the thresholding step better at extracting a larger portion of the subject region. Nevertheless, the Distance Transform can be used as an alternative.

Figure 8 illustrates the functions U, $\Phi$ and $\log(\Phi)$ for comparison. $\Phi$ has the distinctive characteristic of being able to separate different parts of a shape based on their thickness. However, to get the better separation for thresholding, it is desirable to separate the intensity values for the different parts better. Therefore the natural logarithm is taken (although any base of logarithm could be used). As shown on the right of Figure 8, the values of $\log(\Phi)$ are much more strongly divided into the torso part and the other parts, making it easier to remove the torso part to remove the covariate factors.

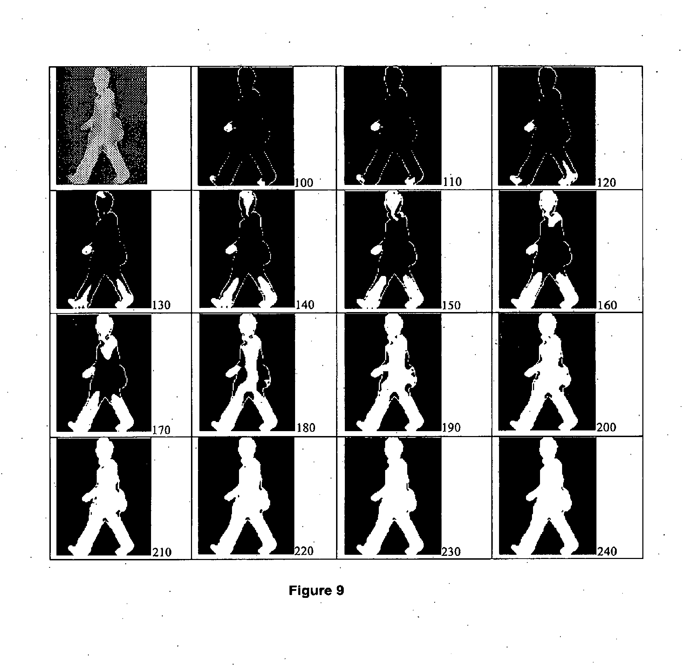

Figure 9 shows the effect of different threshold values on a GEI. The $P_{RW}$GEI is shown at the top left and the silhouette is then shown with thick regions removed based on thresholds between 100 and 240. As above, the $P_{RW}$GEI was scaled to have pixel values in the range 0 to 255. It can clearly be seen that below a threshold of 140 the head is extracted, leaving too little information for recognition. Above 170 the torso part is not correctly identified and removed. The best results are with a threshold of 150-160. It will be appreciated that these values depend on the scaling of the $P_{RW}$GEI pixel values. The thresholds do not work below about 55% of the maximum pixel value or above about 70% thereof. The preferred ranges for the threshold level are between 55 and 67% of the maximum pixel value, more preferably between 59 and 63%.

**Claims**

**1.** A method of producing a gait representation for a subject, comprising the steps of:

acquiring a sequence of binary images of the subject representing the gait of said subject;
analysing each image of said sequence to identify one or more regions having a certain thickness based on a thickness characteristic function and a threshold value;
for each image, removing said one or more regions from said image to produce a modified image; and
combining said modified images in the sequence to produce a gait energy image; wherein the step of analysing the images comprises identifying a boundary between background and foreground parts of each image; and **characterized in that** the thickness characteristic function is based on a Poisson Random Walk function, where the value for a given point within the foreground part of an image is the expected number of steps that will be taken in a Poisson Random Walk until the walk reaches said boundary of said image.

**2.** A method as claimed in any preceding claim, wherein the thickness characteristic function is based on both the value of a basic function and on the gradient of said basic function.

3. A method as claimed in any preceding claim, wherein the thickness characteristic function is based on a logarithm of a basic function

4. A method as claimed in claim 3, wherein the thickness characteristic function is based on a logarithm of said basic function combined with the magnitude of the gradient of said basic function.

5. A method as claimed in any preceding claim, wherein the threshold value of said thickness characteristic function is selected so that it separates a torso region from the rest of the foreground part.

6. A method as claimed in any preceding claim, wherein the thickness characteristic function has a range of values and wherein the threshold is greater than 55% of the top of said range.

7. A method as claimed in any preceding claim, wherein the thickness characteristic function has a range of values and wherein the threshold is less than 70% of the top of said range.

8. A method as claimed in any claim 6 or 7, wherein the threshold lies within a range of 55 to 67% of the top of said range, preferably within a range of 59 to 63% of the top of said range.

9. A method as claimed in any preceding claim, further comprising reducing the dimensionality of the gait energy image data.

10. A method as claimed in claim 9, wherein the gait energy image is subjected to either or both of Principal Component Analysis and Linear Discriminant Analysis, preferably Principal Component Analysis followed by Linear Discriminant Analysis.

11. A method as claimed in any preceding claim, further comprising a step of matching the gait energy image to a database of gait energy images.

12. A system for producing a gait identifier for a subject, comprising:

> an image capture device for capturing a sequence of binary images of a subject; and
> a processor arranged to:
>
>> analyse each image of said sequence to identify one or more regions having a certain thickness based on a thickness characteristic function and a threshold value;
>> for each image, remove said one or more regions from said image to produce a modified image; and
>> to combine said modified images in the sequence to produce a gait energy image;
>
> wherein as part of the analysis step, the processor is arranged to identify a boundary between background and foreground parts of each image; and
> wherein the thickness characteristic function is based on a Poisson Random Walk function, where the value for a given point within the foreground part of an image is the expected number of steps that will be taken in a Poisson Random Walk until the walk reaches said boundary of said image.

13. A software product comprising instructions which when executed by a computer cause the computer to carry out a method as claimed in any of claims 1 to 11.

14. A method of providing a software product to a remote location by means of transmitting data to a computer at that remote location, the data comprising instructions which when executed by the computer cause the computer to carry out a method as claimed in any of claims 1 to 11.

**Patentansprüche**

1. Verfahren zum Erzeugen einer Gangdarstellung für ein Objekt, wobei das Verfahren die folgenden Schritte umfasst:

> Erfassen einer Folge von binären Abbildungen des Objektes, die den Gang des Objektes darstellen;
> Analysieren jeder Abbildung der Bildfolge, um einen oder mehrere Bereiche zu identifizieren, die eine bestimmte Dicke auf der Grundlage einer charakteristischen Dickenfunktion und einen Schwellenwert aufweisen;
für jede Abbildung Entfernen des einen oder der mehreren Bereiche aus der Abbildung, um eine modifizierte Abbildung zu erzeugen; und
Kombinieren der modifizierten Abbildungen in der Bildfolge, um eine Abbildung der Gangenergie zu erzeugen; wobei der Schritt des Analysierens der Abbildungen ein Identifizieren einer Grenze zwischen Hintergrund- und Vordergrundteilen jeder Abbildung umfasst; und
**dadurch gekennzeichnet, dass** die charakteristische Dickenfunktion auf der Grundlage einer Poisson-Zufallswegfunktion beruht, bei der der Wert für einen gegebenen Punkt innerhalb des Vordergrundteils einer Abbildung die erwartete Anzahl von Schritten ist, die in einem Poisson-Zufallsweg vermutlich durchgeführt werden muss, bis der Weg die Grenze der Abbildung erreicht.

2. Verfahren nach einem vorhergehenden Anspruch, wobei die charakteristische Dickenfunktion auf der Grundlage sowohl des Wertes einer Basisfunktion als auch auf dem Gradienten der Basisfunktion beruht.

3. Verfahren nach einem vorhergehenden Anspruch, wobei die charakteristische Dickenfunktion auf einem Logarithmus einer Basisfunktion beruht.

4. Verfahren nach Anspruch 3, wobei die charakteristische Dickenfunktion auf einem Logarithmus der Basisfunktion kombiniert mit der Größe des Gradienten der Basisfunktion beruht.

5. Verfahren nach einem vorhergehenden Anspruch, wobei der Schwellenwert der charakteristischen Dickenfunktion derart ausgewählt wird, dass er einen Rumpfbereich von dem Rest des Vordergrundteils trennt.

6. Verfahren nach einem vorhergehenden Anspruch, wobei die charakteristische Dickenfunktion einen Bereich von Werten aufweist und wobei der Schwellenwert größer als 55 % des höchsten Wertes des Wertebereichs ist.

7. Verfahren nach einem vorhergehenden Anspruch, wobei die charakteristische Dickenfunktion einen Bereich von Werten aufweist und wobei der Schwellenwert kleiner als 70 % des höchsten Wertes des Wertebereichs ist.

8. Verfahren nach Anspruch 6 oder 7, wobei der Schwellenwert innerhalb eines Bereiches von 55 bis 67 % des höchsten Wertes des Wertebereichs liegt, vorzugsweise innerhalb eines Bereiches von 59 bis 63 % des höchsten Wertes des Wertebereichs.

9. Verfahren nach einem vorhergehenden Anspruch, das ferner ein Vermindern der Dimensionalität der Abbildungsdaten der Gangenergie umfasst.

10. Verfahren nach Anspruch 9, wobei die Gangenergieabbildung einer von den beiden folgenden oder beiden Analyseverfahren unterworfen wird, nämlich der Hauptkomponentenanalyse und der linearen Diskriminanzanalyse, vorzugsweise der Hauptkomponentenanalyse, dann gefolgt von einer linearen Diskriminanzanalyse.

11. Verfahren nach einem vorhergehenden Anspruch, das ferner einen Schritt des Abgleichens der Gangenergieabbildung mit den Gangenergieabbildungen einer Datenbank umfasst.

12. System zum Erzeugen eines Gangidentifizierers für ein Objekt, wobei das System Folgendes umfasst:

eine Bilderfassungsvorrichtung zum Erfassen einer Folge von binären Abbildungen eines Objektes; und
einen Prozessor, der angeordnet ist, um:

jede Abbildung der Bildfolge zu analysieren, um einen oder mehrere Bereiche zu identifizieren, die eine bestimmte Dicke auf der Grundlage einer charakteristischen Dickenfunktion und einen Schwellenwert aufweisen;
für jede Abbildung den einen oder die mehreren Bereiche aus der Abbildung zu entfernen, um eine modifizierte Abbildung zu erzeugen; und
die modifizierten Abbildungen in der Bildfolge zu kombinieren, um eine Abbildung der Gangenergie zu erzeugen;
wobei als Teil des Analyseschritts der Prozessor angeordnet ist, um eine Grenze zwischen Hintergrund- und Vordergrundteilen jeder Abbildung zu identifizieren; und
wobei die charakteristische Dickenfunktion auf der Grundlage einer Poisson-Zufallswegfunktion beruht, bei der der Wert für einen gegebenen Punkt innerhalb des Vordergrundteils einer Abbildung die erwartete Anzahl von Schritten ist, die in einem Poisson-Zufallsweg vermutlich durchgeführt werden muss, bis der Weg die Grenze der Abbildung erreicht.

13. Softwareprodukt, das Anweisungen umfasst, die, wenn sie von einem Computer ausgeführt werden, den Computer veranlassen, dass er ein Verfahren nach einem der Ansprüche 1 bis 11 ausführt.

14. Verfahren, um ein Softwareprodukt an eine Datenfernverarbeitungseinrichtung bereitzustellen, indem Daten an einen Computer an dieser Datenfernverarbeitungseinrichtung übertragen werden, wobei die Daten Anweisungen umfassen, die, wenn sie von dem Computer ausgeführt werden, den Computer veranlassen, dass er ein Verfahren nach einem der Ansprüche 1 bis 11 ausführt

**Revendications**

1. Procédé de production d'une représentation de la démarche pour un sujet, comprenant les étapes consistant à :

acquérir une séquence d'images binaires du sujet représentant la démarche dudit sujet ;
analyser chaque image de ladite séquence afin d'identifier une ou plusieurs régions ayant une certaine épaisseur sur la base d'une fonction de caractéristique d'épaisseur et d'une valeur seuil ;
pour chaque image, retirer ladite ou lesdites régions de ladite image afin de produire une image modifiée ; et
combiner lesdites images modifiées de la séquence afin de produire une image d'énergie de la démarche ;
dans lequel l'étape d'analyse des images comprend l'identification d'une limite entre des parties d'arrière-plan et de premier plan de chaque image ; et
**caractérisé en ce que** la fonction de caractéristique d'épaisseur est basée sur une fonction de Marche Aléatoire de Poisson, où la valeur pour un point donné dans la partie de premier plan d'une image est le nombre attendu de pas qui seront nécessaires dans une Marche Aléatoire de Poisson jusqu'à ce que la marche atteigne ladite limite de ladite image.

2. Procédé selon l'une quelconque des revendications précédentes, dans lequel la fonction de caractéristique d'épaisseur est basée à la fois sur la valeur d'une fonction de base et sur le gradient de ladite fonction de base.

3. Procédé selon l'une quelconque des revendications précédentes, dans lequel la fonction de caractéristique d'épaisseur est basée sur un logarithme d'une fonction de base.

4. Procédé selon la revendication 3, dans lequel la fonction de caractéristique d'épaisseur est basée sur un logarithme de ladite fonction de base combiné avec l'amplitude du gradient de ladite fonction de base.

5. Procédé selon l'une quelconque des revendications précédentes, dans lequel la valeur seuil de ladite fonction de caractéristique d'épaisseur est sélectionnée de sorte qu'elle sépare une région torse du reste de la partie de premier plan.

6. Procédé selon l'une quelconque des revendications précédentes, dans lequel la fonction de caractéristique d'épaisseur a une plage de valeurs et dans lequel le seuil est supérieur à 55 % du haut de ladite plage.

7. Procédé selon l'une quelconque des revendications précédentes, dans lequel la fonction de caractéristique d'épaisseur a une plage de valeurs et dans lequel le seuil est inférieur à 70 % du haut de ladite plage.

8. Procédé selon l'une quelconque des revendications 6 ou 7, dans lequel le seuil se trouve dans une plage de 55 à 67 % du haut de ladite plage, de préférence dans une plage de 59 à 63 % du haut de ladite plage.

9. Procédé selon l'une quelconque des revendications précédentes, comprenant en outre la réduction de la dimensionnalité des données d'image d'énergie de la démarche.

10. Procédé selon la revendication 9, dans lequel l'image d'énergie de la démarche est soumise à une Analyse en Composantes Principales et/ou à une Analyse Discriminante Linéaire, de préférence à une Analyse en Composantes Principales suivie d'une Analyse Discriminante Linéaire.

**11.** Procédé selon l'une quelconque des revendications précédentes, comprenant en outre une étape consistant à associer l'image d'énergie de la démarche à une base de données d'images d'énergie de la démarche.

**12.** Système de production d'un identifiant de démarche pour un sujet, comprenant :

un dispositif de capture d'image destiné à capturer une séquence d'images binaires d'un sujet ; et
un processeur agencé pour :

analyser chaque image de ladite séquence afin d'identifier une ou plusieurs régions ayant une certaine épaisseur sur la base d'une fonction de caractéristique d'épaisseur et d'une valeur seuil ;
pour chaque image, retirer ladite ou lesdites régions de ladite image afin de produire une image modifiée ; et
combiner lesdites images modifiées de la séquence afin de produire une image d'énergie de la démarche ;
dans lequel, comme partie de l'étape d'analyse, le processeur est agencé pour identifier une limite entre des parties d'arrière-plan et de premier plan de chaque image ; et
dans lequel la fonction de caractéristique d'épaisseur est basée sur une fonction de Marche Aléatoire de Poisson, où la valeur pour un point donné dans la partie de premier plan d'une image est le nombre attendu de pas qui seront nécessaires dans une Marche Aléatoire de Poisson jusqu'à ce que la marche atteigne ladite limite de ladite image.

**13.** Produit logiciel comprenant des instructions qui, lorsqu'elles sont exécutées par un ordinateur, amènent l'ordinateur à réaliser un procédé selon l'une quelconque des revendications 1 à 11.

**14.** Procédé de fourniture d'un produit logiciel à un emplacement à distance par transmission de données à un ordinateur situé à cet emplacement à distance, les données comprenant des instructions qui, lorsqu'elles sont exécutées par l'ordinateur, amènent l'ordinateur à réaliser un procédé selon l'une quelconque des revendications 1 à 11.

Figure 1

Figure 2

Figure 3

Figure 4

Figure 5

**Figure 6**

Figure 7

| U | Φ | log(Φ) |

Figure 8

Figure 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **X. YANG et al.** Gait recognition based on dynamic region analysis. *Signal Processing,* 2008, vol. 88, 2350-2356
- **ZHANG et al.** Active energy image plus 2DLPP for gait recognition. *Signal Processing,* 2010, vol. 90 (7), 2295-2302
- **BASHIR et al.** Gait recognition using gait entropy image. *3rd International Conference on Crime Detection and Prevention (ICDP),* 2009, 1-6
- **KHALID BASHIR et al.** Gait recognition without subject cooperation. *Pattern Recognition Letters,* 2010, vol. 31 (13), 2052-2060
- **X. LI et al.** Gait Components and Their Application to Gender Recognition. *IEEE Transactions on systems, man, and cybernetics - Part C: Applications and reviews,* March 2008, vol. 38 (2
- **S. YU et al.** A framework for evaluating the effect of view angle, clothing and carrying condution on gait recognition. *ICPR,* 2006, 441-444